# EUROPEAN PATENT APPLICATION

(11) **EP 4 776 317 A1**
(43) Date of publication of application: **15.07.2026**
(21) Application number: 26151409.5
(22) Date of filing: 12.01.2026
(51) Int. Cl.: H01H 11/00

(54) **HEALTH AND USAGE MONITORING FOR ELECTRICAL/MECHANICAL CONTACTS**

(30) Priority: 14.01.2025 US 202519020393
(71) Applicant: Schneider Electric USA, Inc., Boston, MA 02108 (US)
(72) Inventor: Leeman, Daniel, Andover, 01810 (US); Foster, Marc, Andover, 01810 (US)
(74) Representative: Plasseraud IP

(57) **Abstract**

A system includes an electrical/mechanical contact having a joint connecting a first conductor to a second conductor for electrical contact with one another. An imaging device has a field of view positioned so the joint is in the field of view. A controller has an input operatively connected to the imaging device to receive imaging data from the imaging device for health and usage monitoring of the joint. A method includes receiving imaging data from an imaging device indicative of health and usage of a joint of an electrical/mechanical contact. Receiving imaging data is performed continuously at intervals. The method includes analyzing the imaging data with a model to create health and usage data indicative of health and usage of the joint and altering electrical current in the joint based on the health and usage data.

## Description

### BACKGROUND

### 1. Field

The present disclosure relates to health and usage monitoring, and more particularly to health and usage monitoring for electrical/mechanical contacts.

### 2. Description of Related Art

Electrical/mechanical contacts are included in molded case circuit breakers (MCCBs), air circuit breakers (ACBs), power switches, power control and monitoring systems, or other applications. The electrical/mechanical contacts include joints where there is an electrical/mechanical connection of two components. The joints may fret which causes changes in electrical resistance across the joint. An increase in resistance increases the power consumption of the system driving power through the joint, which in turn increases power costs. Hot spots are inefficient and can lead to premature failure of the device.

Systems with electrical/mechanical contacts need to be monitored to ensure health of the joints. Traditionally, such systems have windows installed at monitoring locations for infrared (IR) scanning. In some cases, there are areas of systems that are difficult to see or are not monitored at all. Scanning is traditionally performed periodically by maintenance personnel.

The conventional techniques have been considered satisfactory for their intended purpose. However, there is an ever-present need for improved systems and methods for monitoring health and usage of electrical/mechanical contacts. This disclosure provides a solution for this need.

### SUMMARY

A system is provided which comprises:
- an electrical/mechanical contact having a joint connecting a first conductor to a second conductor for electrical contact with one another.
- an imaging device having a field of view, wherein the image device is positioned so the joint is in the field of view; and
- a controller having an input operatively connected to the imaging device to receive imaging data from the imaging device for health and usage monitoring of the joint.

The controller can include an input/output operatively connected to control electrical power in the joint. The controller can include machine readable instructions configured to modify electrical power in the joint based on the imaging data. The machine readable instructions can include instructions configured to extend life of the joint by reducing power in the joint based on a joint temperature indicated in the imaging data exceeding a threshold. The controller can include machine readable instructions configured to cause the controller to apply a model to the imaging data to determine the threshold.

The system can comprise an enclosure, wherein the joint is in the enclosure. The joint can be in a position within the enclosure such that the enclosure blocks line of sight from outside the enclosure to the joint.

The imaging device can include an imager with a sensor having a two-dimensional array of pixels sensitive to thermal infrared band illumination. The joint can be one joint in a plurality of joints. The imaging device can include a plurality of imagers having two-dimensional pixel arrays, each with a separate field of view configured to image a separate respective joint of the plurality of joints.

The system can comprise a printed circuit board assembly (PCBA), wherein the plurality of imagers are mounted to the PCBA. The system can further comprise a microcontroller mounted to the PCBA wherein the PCBA electrically connects the microcontroller to the plurality of imagers.

The system can comprise:
- a wired input/output interface on the PCBA operatively connected to the microcontroller for wired communication of input/output between the microcontroller and devices external to the PCBA.
- a wireless communication output on the PCBA operatively connected for wireless communication between the microcontroller and devices external to the PCBA.

The system can comprise a respective I2C mux operatively connecting each of the plurality of imagers to the microcontroller. Each respective I2C mux and the microcontroller can be configured to continuously monitor the plurality of joints with the plurality of imagers at regular intervals.

The PCBA can be a first PCBA in a plurality of PCBAs. Each PCBA can include a plurality of imagers and a microcontroller. The controller can include the microcontrollers of the plurality of PCBAs, and a distributed control system (DCS) operatively connected to each PCBA for thermal monitoring. The method can include communicating with a distributed control system (DCS) for thermal monitoring.

A method includes receiving imaging data from an imaging device indicative of health and usage of a joint of an electrical/mechanical contact. Receiving imaging data is performed continuously at intervals. The method includes analyzing the imaging data with a model to create health and usage data indicative of health and usage of the joint and altering electrical current in the joint based on the health and usage data. The model can include using machine learning feedback for statistical process control. The imaging device can be sensitive to thermal infrared band illumination.

A device includes an imaging device having a field of view. The imaging device is configured to be positioned so a joint of an electrical/mechanical contact is in the field of view. The device includes a microcontroller having an input operatively connected to the imaging device to receive imaging data from the imaging device for health and usage monitoring of the joint.

The imaging device can include an imager with a sensor having a two-dimensional array of pixels sensitive to thermal infrared band illumination. The joint can be one joint in a plurality of joints, wherein the imaging device includes a plurality of imagers with two-dimensional pixel arrays, each with a separate field of view configured to image a separate respective joint of the plurality of joints to generate the imaging data.

The device can include a printed circuit board assembly (PCBA), wherein the plurality of imagers are mounted to the PCBA. The microcontroller can be mounted to the PCBA wherein the PCBA electrically connects the microcontroller to the plurality of imagers. The microcontroller can include machine readable instructions configured to cause the microcontroller to apply a model to the imaging data to determine an operational threshold for each of the plurality of joints. The device can comprise a wired input/output interface on the PCBA operatively connected to the microcontroller for wired communication of input/output between the microcontroller and devices external to the PCBA. The device can comprise a wireless communication output on the PCBA operatively connected for wireless communication between the microcontroller and devices external to the PCBA. The device can comprise a respective I2C mux can operatively connect each of the imagers to the microcontroller. Each respective I2C mux and the microcontroller can be configured to continuously monitor the plurality of joints with the plurality of imagers at regular intervals. The microcontroller can be configured to communicate with a distributed control system (DCS) operatively connected for thermal monitoring

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic perspective view of an embodiment of a portion of a system constructed in accordance with the present disclosure, showing three connectors of a module;
Fig. 2 is a schematic perspective view of the system of Fig. 1, showing the module seated in a cabinet;
Fig. 3 is a schematic plan view of a portion of the system of Fig. 2, showing the joints where the connectors contact the bus bars of the cabinet to form electrical/mechanical contacts;
Fig. 4 is a schematic perspective view of the system of Fig. 1, showing a device mounted to the module for health and usage monitoring of the joints of Fig. 3;
Fig. 5 is a schematic view of the device for health and usage monitoring of Fig. 4, showing the three thermal imagers;
Figs. 6-8 are respectively side, top, and perspective views of one of the imagers of the device of Fig. 5, schematically showing the two-dimensional array of pixels and the field of view;
Fig. 9 is a schematic view of an embodiment of a system with a plurality of the devices of Fig. 5, showing the devices connected to a distributed control system (DCS) and to a power commission;
Fig. 10 is a graph schematically showing an example of duty cycle for the device of Fig. 5 for continuously monitoring the joints at intervals; and
Fig. 11 is a graph showing modeling upper and lower thresholds determined by the device of Fig. 5, wherein the device can signal for alteration of power handled by a given joint based on the thresholds.

### DETAILED DESCRIPTION

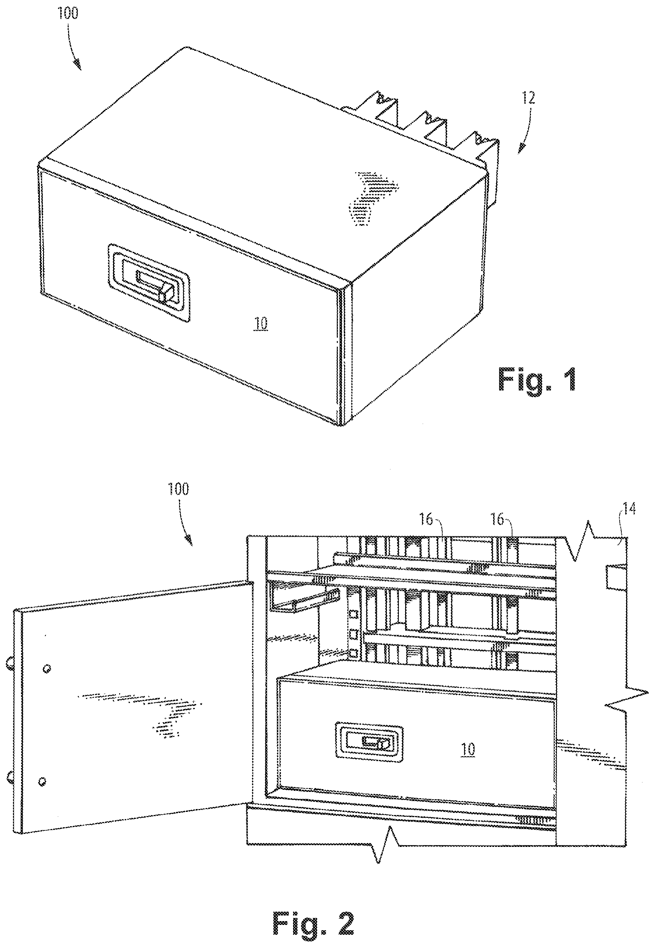

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Figs. 2-11, as will be described. The systems and methods described herein can be used to mitigate the effect of hot spots in electrical/mechanical contacts by changes in operation parameters of the contacts, enabled by continuous thermal monitoring.

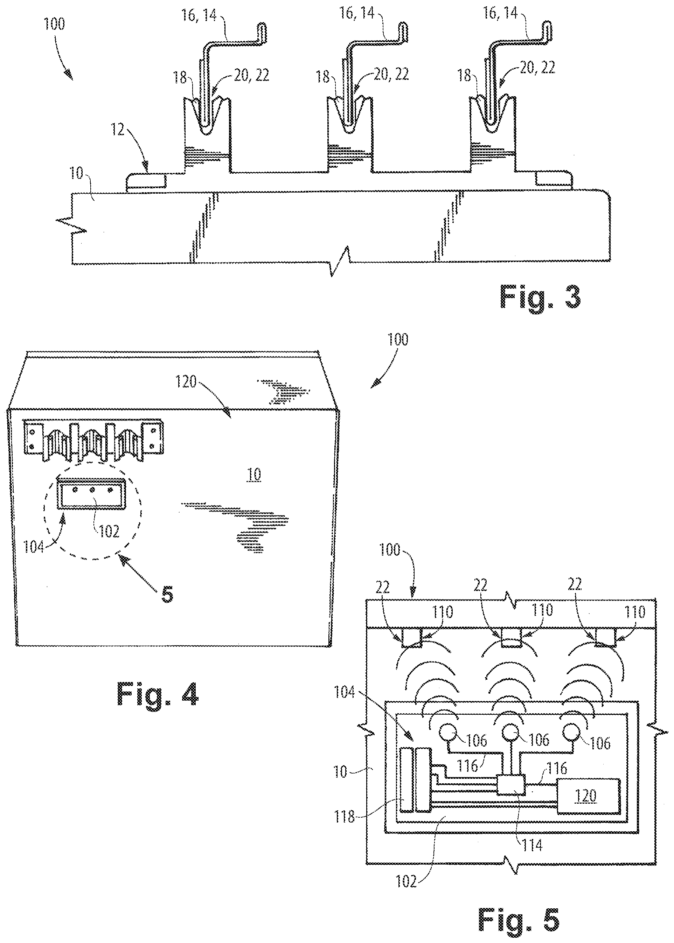

A module 10 incudes a contact assembly 12 for electrical connection of the module 10 to a larger assembly. As shown in Fig. 2, the module 10 can be installed in a cabinet 14, which can be any suitable type of compartment, enclosure, or the like. The cabinet 14 includes conductors 16, which can be in the form of bus bars or any other suitable configuration, for electrical connection with the contact assembly 12, as shown in Fig. 3. In the embodiment shown in Figs. 1-3, there are three contacts 18 on the module 10, which connect to three conductors 16 of the cabinet 14, respectively, e.g. for handling three phase electrical power or the like. However, those skilled in the art will readily appreciate that any suitable number of contacts 18 and conductors 16 can be used without departing from the scope of this disclosure.

The contacts 18 mechanically clamp the conductors 16 to provide electrical/mechanical contacts 20, each of which provides a joint 22 where the electrical conductor material of the conductor 16 is in contact with the electrical conductor material of the contact 18.

With reference now to Fig. 4, a health and usage monitor 102 including an imaging device 104 can be mounted to the module 10 so that the joints 22 (labeled in Fig. 3) can be viewed by the imaging device 104. As labeled in Fig. 5, the imaging device 104 includes a plurality of imagers 106. There is one imager 106 for each joint 22 to be monitored, however those skilled in the art will readily appreciate that any suitable number of imagers 106 can be included. With the module 10 installed in the cabinet 14 of Fig. 2, the joints 22 in a position within the cabinet 14 such that the cabinet 14 blocks line of sight from outside the cabinet 14 to the joints 22. Therefore, the imaging device 104 is in a position to monitor heath and usage of the joints 22 while installed within the cabinet 14. Nonetheless, the imaging device 104 is spaced apart from the joints 22, i.e. the imaging device 104 is not mechanically or electrically contacting the joints 22 as a thermocouple would need to do to take a temperature reading of the joints 22.

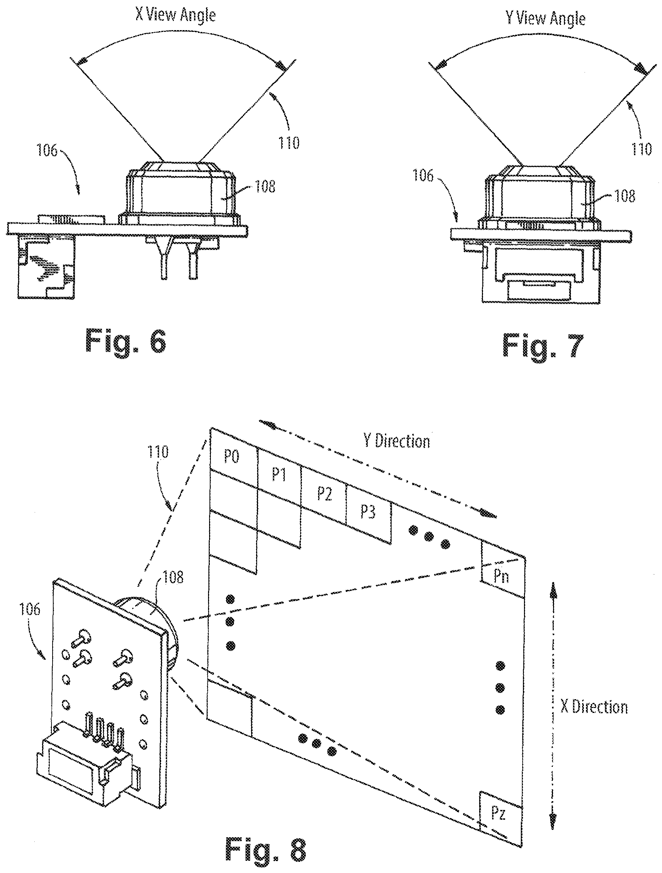

With reference now to Fig. 6, each imager 106 has a sensor 108. Fig. 7 also shows the sensor 106 of one of the imagers 106, with its field of view 110 shown from a lateral angle relative to Fig. 6. As shown schematically in Fig. 8, the sensor 108 has a two-dimensional array of pixels (schematically indicated in the field of view 110 in Fig. 8 with labels p0, p1, p2, p3...pn, pz) sensitive to thermal infrared band illumination. Each imager has a separate field of view 110, schematically shown in each of Figs. 6-8, configured to image a separate respective one of the joints 22, as shown schematically in Figs. 4-5. The imagers 106 can be positioned or angled by custom design of the monitor 102 to specific configurations of joints 22, or , the imagers 106 can include mechanisms to move the field of view during use, so that either way each relevant joint 22 is in the field of view 110 of the associated imager 106.

With reference again to Fig. 5, the monitor 102 includes a printed circuit board assembly (PCBA) 112. The imagers 106 are mounted to the PCBA 112. A microcontroller 114 is mounted to the PCBA 112 wherein the PCBA 112 electrically connects the microcontroller 114 to the imagers 106, e.g., through traces or lines 116, not all of which are labeled for sake of clarity, so the microcontroller 114 can receive imaging data from the imagers 106 of the imaging device 104 for health and usage monitoring of the joints 22. A wired input/output interface 118 on the PCBA is operatively connected, e.g., by one or more traces or lines 116, to the microcontroller 114 for wired communication of input/output between the microcontroller 114 and devices external to the PCBA 112. A wireless communication input/output 120 on the PCBA 112 is operatively connected to the microcontroller 114, e.g., by one or more traces or lines 116, for wireless communication, e.g., Wi-fi, Zigbee, Bluetooth, or the like, between the microcontroller 114 and devices external to the PCBA 112. Output from the microcontroller 114 can be output over the interface 118 and/or input/output 120 to control electrical power in the joints 22 based on the imaging data. While shown and described herein with reference to microcontroller 114, those skilled in the art will readily appreciate that any suitable type of controller can be used such as any suitable digital processor, field programmable gate array (FPGA), or the like, without departing from the scope of this disclosure.

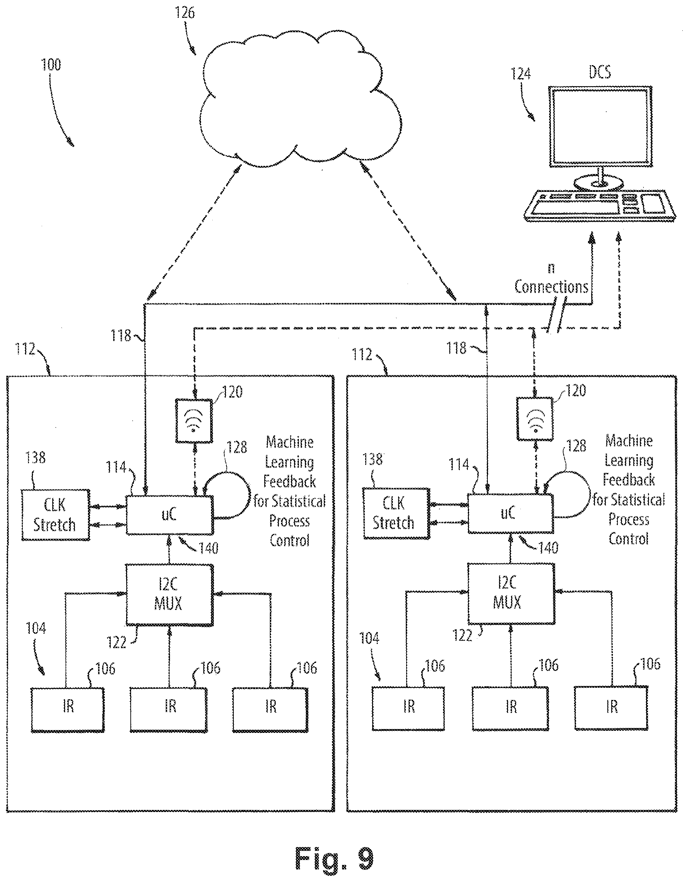

With reference now to Fig. 9, a respective I2C mux 122 is operatively connecting each of the plurality of imagers 106 to the input 140 of the microcontroller 114. Each respective I2C mux 122 and the microcontroller 114 are configured to continuously monitor the plurality of joints 22 (labeled in Fig. 5) with the plurality of imagers 106 at regular, configurable intervals. A clock (CLK) stretch 138 provides clock stretching control for the 12C mux 122 to drive imagers 106 according to the duty cycle. While shown and described herein with reference to I2C mux 122, those skilled in the art will readily appreciate that any suitable communication protocol besides I2C can be used without departing from the scope of this disclosure.

With ongoing reference to Fig. 9, the system 100 can include any suitable number of PCBAs 112 as described above, as indicated in Fig. 9 by the label for n connections, for monitoring any suitable number of joints 22 (labeled in Fig. 5) of any suitable number of modules 10 (labeled in Fig. 4). The controller for the system 100 can be a single microcontroller 114, e.g. if a single monitor 102 is used for directly monitoring and controlling joints 22 (labeled in Fig. 5). However, the controller for the system 100 can include the microcontrollers 114 of the plurality of PCBAs 112, a distributed control system (DCS) 124 operatively connected to each PCBA 112 for thermal monitoring which enables load shedding or indicates the needs for preventative maintenance of the electrical/mechanical joint, and/or a power commission system 126, such as EcoStruxure Power Commission available from Schneider Electric SE of Rueil-Malmaison, France, operatively connected to each PCBA 112. The microcontroller 114 collects and processes the IR data and creates statistical models. The DCS 124 controls the power flow for the system at large and is the main central interface for the operator in a control room. This allows operators to change process parameters in their system by changing or redistributing loads. The DCS 124 can also receive warnings or critical errors from the monitor 102.

The controller of system 100 includes machine readable instructions configured implement methods as disclosed herein to cause the controller to apply a model to the imaging data from the imagers 106 to determine an operational threshold (also referred to as threshold) for each of the plurality of joints 22 (labeled in Fig. 5), and to modify electrical power in the joints 22 based on the imaging data. This can extend life of the joints 22 by reducing power in the joints 22 based on the joint temperatures indicated in the imaging data exceeding a threshold as further described below. The DCS 124 can provide current environmental variables and state of the system 100. This allows the tighter statistical process control - the system settings can be determined upon actual data and current operation of the system 100, not just upon the theoretically specified operating ranges.

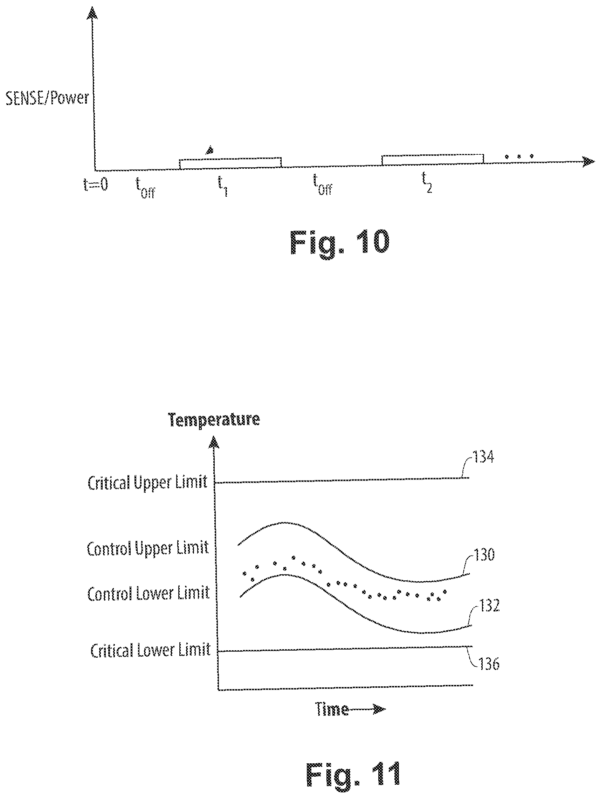

With ongoing reference to Fig. 9, the controller of the system 100 applies a model 128 to the imaging data to determine the threshold, e.g., wherein the model 128 includes performing machine learning feedback for statistical process control of power in the joints 22 based on the imaging data and system parameters shared from the DCS 124, e.g., to mitigate hot spots in the joints 22 of Fig. 5. Those skilled in the art will readily appreciate that any suitable model can be implemented, and that any or all portions of the model can be implemented or reside in any portion of the controller including at the microcontrollers 114, the DCS 124, and/or power commission 126 level. Receiving imaging data, e.g., along lines 116 of Fig. 5, from the imagers 106 into the microcontrollers 114 can be performed continuously at intervals, e.g., regular intervals. For example, as shown in Fig. 10, the monitor 102 (labeled in Fig. 9) can power down for a first period of time t_{OFF} followed by powering the imagers 106 (labeled in Fig. 9) for a period of time t₁, followed by powering down for a second period of time t_{OFF} followed by powering transferring sensed data to the microcontroller 114 (labeled in Fig. 9) by wired or wireless transmission for a period t₂. In this duty cycle, the monitor 102 can be battery powered and can manage the battery power to last long enough for batteries to be replaced during regular maintenance when the module 10 of Fig. 1 can be removed from the cabinet 14 of Fig. 2 for other regular maintenance reasons.

With reference to Fig. 11, the method can include analyzing the imaging data with a model 128 of Fig. 9 to create health and usage data indicative of health and usage of the joint 22 of Fig. 5 and altering electrical current in the joint 22 based on the health and usage data, e.g., wherein the operational thresholds are based on current system variables provided by the DCS 124. Altering the electrical current in the joint 22 can include the monitor 102 directly controlling current in the joint, the monitor 102 communicating with the DCS 124 which controls current in the joint 22, otherwise indicating to a user to alter the current in the joint 22, or the like. For instance, the model can generate health and usage data in the form of operational upper and lower thresholds 130, 132 that are more conducive to longer joint life than the traditional critical limits 134, 136. The model 128 of Fig. 9 can include using machine learning feedback for statistical process control, and the controller can alter power flow in the joints 22 of Fig. 5 to maintain joint temperatures between the thresholds 130, 132, raising and lowering power in any particular joint 22 and sharing loads among joints 22 as needed to do so. The upper and lower thresholds 130, 132 are dynamic meaning they self-regulate based on system conditions.

Systems and methods as disclosed herein allow for sensors embedded in close proximity to the joints, which and can be located inside equipment that is otherwise not visible or accessible. The device can perform continuous high resolution IR temperature scans at regular configurable intervals throughout the life of the device and is capable of both wired and wireless input and output signaling to a DCS, without electrically contacting the joint with a sensor as a thermocouple would need to do.

The machine readable instructions, methods, and operations of the device can have both hardware and software modules to defined thermal monitoring set points and alarms. The period of the monitoring interval can be user configured in software (minute, hour, weekly, monthly, or the like) and a standard operating profile can be logged to perform statistical process control. Normal operating parameters can be generated from a model or machine learning/artificial intelligence algorithm based on empirical data and/or a hard pre-prescribed set points which affords advanced control. These normative curves can be used to calibrate the sensors between samples. Additionally, the control model can be specific and uniquely derived to each system and sub-system of which it is monitoring, allowing for meaningful and precise/individualistic monitoring. The device can be suitable for environmental temperatures between 0 and 60° C with a temperature sensor range of 200° C. It can be placed in proximity to the joint and capable of receiving inputs and outputs from the DCS. A high-resolution device provides insight into the health and usage of the joint allowing for advanced control schemes to improve lifetime and uptime of the contacts.

Unmonitored, the joints may fret which causes changes in resistance. An increase in resistance increases the power consumption of the system which in turn increases costs to the user. Hot spots are inefficient and can lead to premature failure of the device. The effect of hot spots can be mitigated by changes in operation parameters which is enabled by continuous thermal monitoring as disclosed herein.

Devices and methods as disclosed herein can improve the accuracy and resolution of the measurement as it can be placed physically closer to the measurement site than in traditional techniques and monitor areas which traditionally are not accessible. Additionally, a window to physically separate the device and the measurement site are not required. Devices can be placed at multiple locations and monitor all electrical/mechanical contacts with a device in real-time. This affords continuous monitoring of the entire electrical system as compared to maintenance personnel walking to each window, performing a scan, and logging the data or not monitoring an area at all.

The system and sub-system statistical control of the temperatures allows for process limits to be established based on real load conditions, as shown in Fig. 11. In the event of an alarm, engineering services can be able to troubleshoot the issues before any actual equipment failure. Additionally, with continuous monitoring, power commission and layers can be used to alert local and regional maintenance of impending issues with the non-visible contact connections.

The device can log the operating temperature of the electrical/mechanical contacts over time and can build a model 128 (schematically shown in Fig. 9) of the standard operating procedures for given conditions received from the DCS 124. Then soft "smart" thresholds can be set by the device to allow for advanced control, as shown in Fig. 11. The normative curves, e.g. in Fig. 11, can be used for calibration. If the sensors can move and/or overlap fields of view, the device can do some calibration by checking sensors against each other. Current can be input to the joints 22 of Fig. 5 to self-calibrate/validate pixel-wise temperature measurements. This could drive a correlation between actual equipment current draw and the joint temperatures.

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, or the like), or an embodiment combining software and hardware aspects, all possibilities of which can be referred to herein as a "circuit," "module," or "controller." A "circuit," "module," or "controller" can include one or more portions of one or more separate physical hardware and/or software components that can together perform the disclosed function of the "circuit," "module," or "controller", or a "circuit," "module," or "controller" can be a single self-contained unit (e.g., of hardware and/or software). Furthermore, aspects of this disclosure may take the form of a computer program product embodied in one or more computer readable medium(s) having computer readable program code embodied thereon. Embedded systems that have multiple CPU's, GPU, in-memory compute, other specialized neural network hardware can be used in this application.

The methods and systems of the present disclosure, as described above and shown in the drawings, provide for mitigating the effect of hot spots in electrical/mechanical contacts by changes in operation parameters of the contacts, enabled by continuous thermal monitoring. While the apparatus and methods of the subject disclosure have been shown and described, those skilled in the art will readily appreciate that changes and/or modifications may be made thereto without departing from the scope of the subject disclosure.

Below are provided a number of examples.

According to an example, a system is provided comprising:
- an electrical/mechanical joint connecting a first conductor to a second conductor for electrical contact with one another;
- an imaging device having a field of view, wherein the imaging device is positioned so the joint is in the field of view; and
- a controller having an input operatively connected to the imaging device to receive imaging data from the imaging device for monitoring of the joint.

According to an example, the system wherein the controller includes an input/output operatively connected to control electrical power in the joint.

According to an example, the system wherein the controller includes machine readable instructions configured to modify electrical power in the joint based on the imaging data.

According to an example, the system wherein the machine readable instructions include instructions configured to extend life of the joint by reducing power in the joint based on a joint temperature indicated in the imaging data exceeding a threshold.

According to an example, the system wherein the controller includes machine readable instructions configured to cause the controller to apply a model to the imaging data to determine the threshold.

According to an example, the system further comprises an enclosure, wherein the joint is in the enclosure.

According to an example, the system wherein the joint is in a position within the enclosure such that the enclosure blocks line of sight from outside the enclosure to the joint.

According to an example, the system wherein the imaging device includes an imager with a sensor having a two-dimensional array of pixels sensitive to thermal infrared band illumination.

According to an example, the system wherein the joint is one joint in a plurality of joints, wherein the imaging device includes a plurality of imagers having two-dimensional pixel arrays, each with a separate field of view configured to image a separate respective joint of the plurality of joints.

According to an example, the system further comprises a printed circuit board assembly (PCBA), wherein the plurality of imagers are mounted to the PCBA and further comprising:
a microcontroller mounted to the PCBA wherein the PCBA electrically connects the microcontroller to the plurality of imagers.

According to an example, the system further comprises:
- a wired input/output interface on the PCBA operatively connected to the microcontroller for wired communication of input/output between the microcontroller and devices external to the PCBA; and
- a wireless communication output on the PCBA operatively connected for wireless communication between the microcontroller and devices external to the PCBA.

According to an example, the system further comprises a respective I2C mux operatively connecting each of the plurality of imagers to the microcontroller, wherein each respective I2C mux and the microcontroller are configured to continuously monitor the plurality of joints with the plurality of imagers at regular intervals.

According to an example, the system wherein the PCBA is a first PCBA in a plurality of PCBAs each including a plurality of imagers and a microcontroller, wherein the controller includes the microcontrollers of the plurality of PCBAs and
a distributed control system (DCS) operatively connected to each PCBA for thermal monitoring.

According to an example, it is provided a method comprising:
- receiving imaging data from an imaging device indicative of health and usage of a joint of an electrical/mechanical contact, wherein receiving imaging data is performed continuously at intervals;
- analyzing the imaging data with a model to create health and usage data indicative of health and usage of the joint; and
- altering electrical current in the joint based on the health and usage data.

According to an example, the method wherein the model includes using machine learning feedback for statistical process control.

According to an example, the method wherein the imaging device is sensitive to thermal infrared band illumination.

According to an example, the method further comprises communicating with a distributed control system (DCS) for thermal monitoring.

According to an example, it is provided a device comprising:
- an imaging device having a field of view, wherein the imaging device is configured to be positioned so an electrical/mechanical joint is in the field of view; and
- a microcontroller having an input operatively connected to the imaging device to receive imaging data from the imaging device for monitoring of the joint.

According to an example, the device wherein the imaging device includes an imager with a sensor having a two-dimensional array of pixels sensitive to thermal infrared band illumination.

According to an example, the device wherein the joint is one joint in a plurality of joints, wherein the imaging device includes a plurality of imagers with two-dimensional pixel arrays, each with a separate field of view configured to image a separate respective joint of the plurality of joints to generate the imaging data.

According to an example, the device further comprises:
- a printed circuit board assembly (PCBA), wherein the plurality of imagers are mounted to the PCBA, wherein the microcontroller is mounted to the PCBA wherein the PCBA electrically connects the microcontroller to the plurality of imagers, wherein the microcontroller includes machine readable instructions configured to cause the microcontroller to apply a model to the imaging data to determine an operational threshold for each of the plurality of joints;
- a wired input/output interface on the PCBA operatively connected to the microcontroller for wired communication of input/output between the microcontroller and devices external to the PCBA;
- a wireless communication output on the PCBA operatively connected for wireless communication between the microcontroller and devices external to the PCBA; and
- a respective I2C mux operatively connecting each of the imagers to the microcontroller, wherein each respective I2C mux and the microcontroller are configured to continuously monitor the plurality of joints with the plurality of imagers at regular intervals.

According to an example, the device wherein the microcontroller is configured to communicate with a distributed control system (DCS) operatively connected for thermal monitoring.

## Claims

1. A device comprising:
- an imaging device (104) having a field of view, wherein the imaging device (104) is configured to be positioned so an electrical/mechanical joint (22) is in the field of view (110); and
- a microcontroller (114) having an input operatively connected to the imaging device (104) to receive imaging data from the imaging device (104) for monitoring of the joint (22).

2. The device as recited in claim 1, wherein the imaging device (104) includes an imager (106) with a sensor (108) having a two-dimensional array of pixels sensitive to thermal infrared band illumination.

3. The device as recited in any one of the claims 1 or 2, wherein the joint (22) is one joint in a plurality of joints, wherein the imaging device (104) includes a plurality of imagers (106) with two-dimensional pixel arrays, each with a separate field of view (110) configured to image a separate respective joint of the plurality of joints to generate the imaging data.

4. The device as recited in claim 3, wherein the microcontroller (114) includes machine readable instructions configured to cause the microcontroller (114) to apply a model (128) to the imaging data to determine an operational threshold for each of the plurality of joints (22).

5. The device as recited in any of claims 3 or 4, further comprising:
- a printed circuit board assembly (PCBA) (112), wherein the plurality of imagers (106) are mounted to the PCBA (112), wherein the microcontroller (114) is mounted to the PCBA (112) wherein the PCBA (112) electrically connects the microcontroller (114) to the plurality of imagers (106).

6. The device as recited in claim 5, further comprising:
- a wired input/output interface (118) on the PCBA (112) operatively connected to the microcontroller (114) for wired communication of input/output between the microcontroller (114) and devices external to the PCBA (112);
- a wireless communication input/output (120) on the PCBA (112) operatively connected for wireless communication between the microcontroller (114) and devices external to the PCBA (112); and
- a respective I2C mux (122) operatively connecting each of the imagers (106) to the microcontroller (114), wherein each respective I2C mux (122) and the microcontroller (114) are configured to continuously monitor the plurality of joints (22) with the plurality of imagers (106) at regular intervals.

7. The device as recited in any of the claims 1 to 6, wherein the microcontroller (114) is configured to communicate with a distributed control system (DCS) (124) operatively connected for thermal monitoring.

8. A system (100) comprising:
- an electrical/mechanical joint (22) connecting a first conductor to a second conductor for electrical contact with one another;
- a controller having an input operatively connected to the imaging device to receive imaging data from the imaging device for monitoring of the joint; and
- a device according to any one of the claims 1 to 7, the controller comprising the microcontroller (114) of the device.

9. The system (100) as recited in claim 8, wherein the controller includes an input/output operatively connected to control electrical power in the joint (22).

10. The system (100) as recited in claim 9, wherein the controller includes machine readable instructions configured to modify electrical power in the joint (22) based on the imaging data.

11. The system (100) as recited in claim 10, wherein the machine readable instructions include instructions configured to extend life of the joint (22) by reducing power in the joint (22) based on a joint temperature indicated in the imaging data exceeding a threshold.

12. The system as recited in any of the claims 8 to 11, further comprising an enclosure, wherein the joint is in the enclosure.

13. The system as recited in claim 12, wherein the joint is in a position within the enclosure such that the enclosure blocks line of sight from outside the enclosure to the joint.

14. A method comprising:
- receiving imaging data from an imaging device (104) indicative of health and usage of a joint (22) of an electrical/mechanical contact, wherein receiving imaging data is performed continuously at intervals;
- analyzing the imaging data with a model (128) to create health and usage data indicative of health and usage of the joint (22); and
- altering electrical current in the joint (22) based on the health and usage data.

15. The method as recited in claim 14, wherein the model (128) includes using machine learning feedback for statistical process control.
